# EUROPÄISCHE PATENTSCHRIFT

(11) **EP 0 603 692 B1**
(45) Veröffentlichungstag und Bekanntmachung des Hinweises auf die Patenterteilung: **17.09.1997**
(21) Anmeldenummer: 93120032.3
(22) Anmeldetag: 11.12.1993
(51) Int. Cl.: H04Q 11/04, H04M 3/24, H04M 3/30

(54) **Verfahren zum automatischen Prüfen von Vermittlungs-und Uebertragungsvorgängen in einem Fernmeldenetz sowie eine Antwortstation zur Durchführung des Verfahrens**
Method for automatic testing of switching and transmission procedures in a telecommunication network and a responder for implementing this method
Méthode pour tester automatiquement des procédures de commutation et de transmission dans un réseau de télécommunication et une poste de réponse pour réaliser cette méthode

(30) Priorität: 18.12.1992 CH 3868/92
(43) Veröffentlichungstag der Anmeldung: 29.06.1994
(73) Patentinhaber: Siemens Schweiz AG, 8047 Zürich (CH); SIEMENS AKTIENGESELLSCHAFT, 80333 München (DE)
(72) Erfinder: Bucher, Roberto, CH-6900 Lugano (CH); Nussbaumer, Iwan, CH-4253 Liesberg (CH); Zehnder, Charles, CH-4102 Binningen (CH)

(56) Entgegenhaltungen:
- EP-A- 0 171 803
- EP-A- 0 475 749
- DE-A- 3 907 237
- US-A- 4 138 599
- INTERNATIONAL CONFERENCE ON COMMUNICATIONS ICC-87, SESSION 38, PAPER 6, Bd. 3 , 7. Juni 1987 , SEATTLE US Seiten 1 - 5 S.M.KUZYSZYN ET AL. 'ISDN Protocol and Service Verification and Performance Testing'
- PATENT ABSTRACTS OF JAPAN vol. 10, no. 343 (E-456)(2399) 19. November 1986 & JP-A-61 146 053 (FUJITSU)
- GLOBECOM'86, SESSION 7, PAPER 5, Bd. 1 , 1. Dezember 1986 , HOUSTON, US Seiten 1 - 5 G.R.COURTNEY 'I/O Emulator for Laboratory Testing of Digital Telephone Switches'
- CCITT Recommendation E434; 1992; Geneva CH; Seiten 1-8

## Beschreibung

Die vorliegende Erfindung betrifft ein Verfahren nach dem Oberbegriff des Patentanspruchs 1 sowie eine Antwortstation zur Durchführung des Verfahrens.

Bei Inbetriebsetzungen und Funktionsprüfungen von Endgeräten eines beispielsweise nach ISDN-(Integrated Services Digital Network)-Normen realisierten Fernmeldenetzes oder bei Überprüfungen von Verbindungen in einem Fernmeldenetz müssen Verbindungen zu anderen Endgeräten des Fernmeldenetzes aufgebaut werden. Über die aufgebauten Verbindungen können Leistungsmerkmale der miteinander verbundenen Endgeräte bzw. der im Fernmeldenetz für die jeweilige Verbindungsart verwendeten Funktionen getestet werden. Zu den zu prüfenden Funktionen und Leistungsmerkmalen gehören insbesondere das Senden und Empfangen von Sprach, Daten- und Bildinformationen sowie die damit verbundene Identifizierung der betroffenen Endgeräte bzw. Endgerätetypen. Die im Fernmeldenetz am häufigsten verwendeten Endgerätetypen sind dabei nebst Telephonapparat, beispielsweise Faksimilegeräte oder ein mit einem Leitunganschluss versehener Computer zur Übertragung von Daten.

Eine bekannte Lösung besteht darin, dass von dem zu testenden Endgerät eine Verbindung zu einem an das gleiche Fernmeldenetz angeschlossenen Endgerät vom gleichen Gerätetyp aufgebaut wird und dass sämtliche Leistungsmerkmale nacheinander manuell geprüft werden. Dies bedingt, dass das gerufene Endgerät durch einen Operator bedient wird und alle im Fernmeldenetz vorkommenden Endgerätetypen - wie Telephonapparat, Faksimilegerät und Computeranschluss für Datenübertragungen - verfügbar sind. Durch die manuelle Bedienung des für die Tests benötigten Endgerätes als Prüfstation wird die Verfügbarkeit durch die Arbeitszeiten des Operators eingeschränkt. Darüber hinaus ist die Handhabung umständlich und gegen einen unberechtigten Zugriff nicht geschützt.

In einem Aufsatz von Steve M. Kuzyszyn und Kun I. Park mit dem Titel "ISDN Protocol and Service Verification and Performance Testing" (IEEE Int. Conf. on Communications, Communications - Sound to Light, Seattle, Washington, 7. bis 10. Juni 1987, Vol. 1 bis 3) wird ein Testmodul (CEM-Customer Emulation Module) beschrieben, das zur Überprüfung von Übertragungsprotokollen in ISDN-(lntegrated Services Digital Network)-Fernmeldenetzen verwendet wird, wobei vom Anwender Testprogramme mit Hilfe einer eigens für das Testmodul entwickelten Programmiersprache zu erstellen sind, die mit einem Interpreter in ausführbare Befehle umgesetzt werden.

In der EP 0 475 749 A2 ist ein ISDN-Terminaladapter mit Diagnosefunktion beschrieben, die ermöglicht, in Terminaladaptern von entfernten Teilnehmeranschlüssen gespeicherte Daten und Informationen auszulesen, zu prüfen und nach Bedarf zu ändem. Hierzu wird über das ISDN jeweils zum entfernten Terminaladapter eine Verbindung aufgebaut, über die dann Daten und Befehle ausgetauscht werden.

Der vorliegenden Erfindung liegt die Aufgabe zugrunde, ein einfaches Verfahren zur umfassenden Prüfung von Vermittlungs- und Übertragungsvorgängen in einem Fernmeldenetz und von an das Fernmeldenetz angeschlossenen Endgeräten anzugeben.

Diese Aufgabe wird durch die im kennzeichnenden Teil des Patentanspruchs 1 angegebenen Massnahmen gelöst. Vorteilhafte Ausgestaltungen der Erfindung sowie eine Antwortstation zur Durchführung des Verfahrens sind in weiteren Ansprüchen angegeben.

Die Erfindung weist folgende Vorteile auf: Durch die automatische Beantwortung und Verarbeitung von Anrufen, die von mit dem Fernmeldenetz verbundenen und zu testenden Endgeräten ausgehen, können die geforderten Testsequenzen jederzeit und mit einer hohen Reproduzierbarkeit erzeugt werden. Die Antwortstation erkennt dabei den Gerätetyp des rufenden Endgerätes automatisch und steuert den Prüfungsablauf dementsprechend. Neben der Identifikation des Gerätetyps erfolgt die Identifikation des rufenden Teilnehmers ebenfalls automatisch. Verbindungen können aber auch von Antwortstationen aus automatisch - beispielsweise periodisch - oder manuell aufgebaut bzw. ausgelöst werden. Bei aufgebauter Verbindung mit einem Endgerät werden entsprechend dem vorhandenen Endgerätetyp Tests durchgeführt, die Aufschluss über die Funktionstüchtigkeit der im Endgerät vorgesehenen Leistungsmerkmale geben. Nach Abschluss der Tests können die Ergebnisse dem rufenden Teilnehmer mitgeteilt bzw. angezeigt und/oder in der Antwortstation aufgezeichnet werden.
Durch das automatische Erkennen des Gerätetyps des rufenden bzw. angeschlossenen Gerätes und das selbständige Ablaufen von Testsequenzen nach dem Verbindungsaufbau können Kosten für Bedienpersonal eingespart werden. Gleichzeitig kann die Verfügbarkeit der Antwortstation für den Benützer wesentlich gesteigert werden. Ferner ergibt sich durch den kompakten und modularen Aufbau der Antwortstation eine einfache Bedienung, eine kostengünstige Wartung und die Möglichkeit, Erweiterungen und Verbesserungen mit geringem Aufwand in die bestehende Lösung zu integrieren. Schliesslich lassen sich mehrere erfindungsgemässe Antwortstationen an dasselbe Fernmeldenetz anschliessen, wobei sich mit mindestens einer dieser Antwortstationen die anderen über das Fernmeldenetz konfigurieren und/oder steuern lassen. Somit lässt sich das gesamte Prüfsystem von einer Station aus überwachen. Dies ist insbesondere dann von Vorteil, wenn Störungsfälle, die in einer dezentralen Antwortstation aufgezeichnet wurden, zur weiteren Überprüfung in eine andere Antwortstation übertragen werden. Die bereits erwähnte modulare Aufbauweise ist auch in diesem Zusammenhang hervorzuheben, da insbesondere die dezentralen Antwortstationen nicht mit allen Komponenten ausgerüstet sein müssen. Beispielsweise können Ein- und Ausgabegeräte und die damit verbundenen Computerprogramme bei solchen Antwortstationen weggelassen werden.

Die Erfindung wird nachfolgend anhand von Zeichnungen beispielsweise näher erläutert. Dabei zeigt
- Fig. 1: einen Aufbau einer erfindungsgemässen Antwortstation,
- Fig. 2: eine in der Antwortstation ablaufende Testsequenz und
- Fig. 3: verschiedene an ein Fernmeldenetz angeschlossene Endgeräte und Antwortstationen.

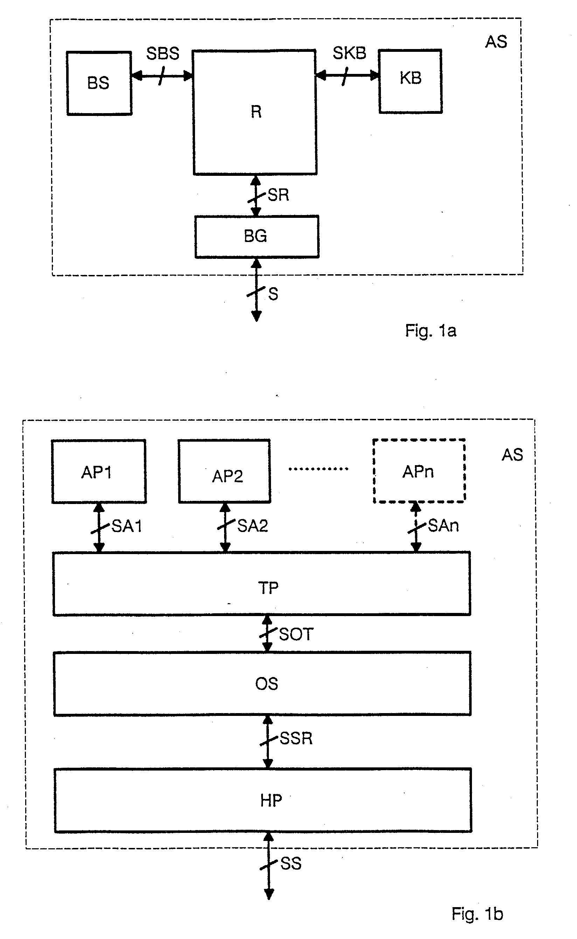

Fig. 1a zeigt einen hardwaremässigen Aufbau einer erfindungsgemässen Antwortstation AS in der voll ausgebauten Ausführung für den Betrieb als Prüfstation in einem beispielsweise nach ISDN-(Integrated Services Digital Network)-Normen aufgebauten Fernmeldenetz. Die Antwortstation AS ist von aussen über eine Schnittstelle S an das Fernmeldenetz anschliessbar, wobei die Schnittstelle S im vorliegenden Ausführungsbeispiel durch die CCITT-(Comité Consultatif International Télégraphique et Téléphonique)-Empfehlung Q.931 (CCITT: Recommendation Q.931: Blue Book, Vol. VI.11, Genf: ITU 1988) als Basisanschluss realisiert ist. Die Antwortstation AS selbst besteht aus einer Schnittstellenbaugruppe BG, einem Rechner R und zwei optionalen Ein-bzw. beeinheiten KB bzw. BS. Dabei nimmt die Schnittstellenbaugruppe BG eine eigentliche Schnittstellenanpassung zwischen der ISDN-typischen Schnittstelle S und einer internen Schnittstelle SR des Rechners R vor. Über zwei weitere Schnittstellen SBS und SKB wird der Rechner R ferner mit der Eingabe- und der Ausgabeeinheit KB und BS verbunden. Wird für die Schnittstelle SR eine verbreitete Norm - wie beispielsweise EISA, AT-Bus oder Future-Bus - verwendet und werden die Schnittstellen SBS und SKB entsprechend den bei handelsüblichen Ein- und Ausgabegeräten verwendeten Schnittstellen gewählt, so können einzelne Komponenten der Antwortstation AS ausgetauscht werden, ohne dass Anpassungen notwendig sind. Dies gilt insbesondere auch für die Schnittstellenbaugruppe BG, die etwa unter der Bezeichnung "ISDN-Karten für Basisanschlüsse" von verschiedenen Herstellern im Handel erhältlich sind.

Sind in speziellen noch zu erläuternden Anwendungen keine Ein- und Ausgabeeinheiten KB und BS der Antwortstation AS notwendig, so besteht der hardwaremässige Aufbau der Antwortstation lediglich aus dem Rechner R und der Schnittstellenbaugruppe BG.

In Fig. 1b ist ein Softwarekonzept zu der anhand Fig. 1a erläuterten Hardware dargestellt, wobei sich dieses Softwarekonzept auch für einen Hardwareaufbau eignet, der sich von dem anhand Fig. 1a beschriebenen unterscheidet.

Zu den hardwaremässig vorgegebenen Schnittstellen S und SR (Fig. 1a) sind entsprechende softwaremässige Schnittstellen SS und SSR vorgesehen, die von einem in der Schnittstellenbaugruppe BG (Fig. 1a) ablaufenden und diese steuernden Hilfsprogramm HP kontrolliert werden.

Das Hilfsprogramm HP steuert somit vor allem die in der speziellen Hardware, nämlich der Schnittstellenbaugruppe BG (Fig. 1a), vorhandenen Funktionen sowie die für die Normen der Schnittstelle SS und SSR verwendeten Protokolle. Ein über die Schnittstelle SSR mit dem Hilfsprogramm HP kommunizierendes Systemprogramm OS übemimmt im Rechner R eine analoge Funktion wie das Hilfsprogramm HP in der Schnittstellenbaugruppe BG: Das Systemprogramm OS steuert die hardwarenahen Komponenten des Rechners R und bedient eine weitere normierte Schnittstelle zu einem auf einem erhöhten Abstraktionsniveau liegenden Treiberprogramm TP.
Dieses Treiberprogramm TP enthält sämtliche zur Kommunikation mit dem Fernmeldenetz bzw. mit anderen Endgeräten des Fernmeldenetzes benötigten Funktionen bzw. Meldungen, wie beispielsweise Aufforderung zur Datenübertragung, Signalisierungen, Anzeigen von Fehlern, usw., ohne dass alle damit verbundenen Einzelheiten dem Benützer des Treiberprogrammes TP bekannt sein müssen.
Die Gesamtheit dieser Funktionen und Meldungen bildet die Grundlage für Schnittstellen SA1 bis SAn zu Applikationsprogrammen AP1 bis APn, die ein weiteres und letztes Abstraktionsniveau darstellen. Die Applikationsprogramme AP1 bis APn beinhalten neben den eigentlichen Testsequenzen beispielsweise auch die Protokollierung von Testabläufen, statistische Auswertungen, Hilfsprogramme zur Einstellung der Parameter der Antwortstation AS, Fernbedienung von mit dem gleichen Fernmeldenetz verbundenen Antwortstationen, usw.

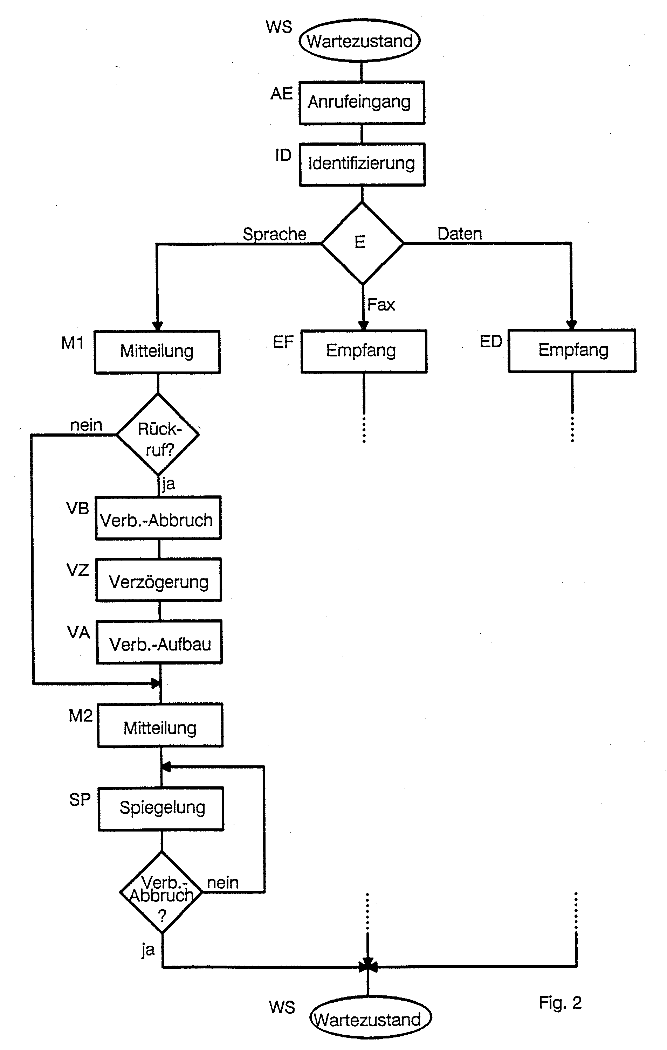

Fig. 2 zeigt anhand eines Flussdiagramms mögliche in der Antwortstation AS (Fig. 1) ablaufende Testsequenzen nach Eintreffen eines Anrufes von einem Endgerät aus. Die Antwortstation AS registriert den Eingang eines Anrufes und geht von einem Wartezustand WS in einen Zustand Anrufeingang AE über, in dem die Verbindung zum Endgerät mit für das Fernmeldenetz charakteristischen Meldungen bestätigt wird. Sobald die Verbindung beidseitig zustande gekommen ist, wird der Gerätetyp und die Rufnummer des Endgerätes in einem Zustand Identifizierung ID bestimmt. Denkbar wäre an dieser Stelle auch eine Überprüfung der Zulässigkeit der Verbindung durch Vergleich der Rufnummer des Endgerätes mit den im Rechner R (Fig. 1a) gespeicherten zulässigen Rufnummern oder durch Verlangen eines Passwortes zur Identifikation der das Endgerät bedienenden Person.

Wird wie im vorliegenden Fall ein gewöhnlicher Telephonapparat erkannt, so geht die Antwortstation AS in einen Zustand Mitteilung M1 über und teilt die im Zustand Identifizierung ID erkannte Rufnummer dem das Endgeräte benützenden Teilnehmer durch Zusammensetzen von vorgegebenen Sprachelementen mit. Im weiteren Testverlauf wird zwischen zwei vom Teilnehmer wählbaren Varianten unterschieden, wobei der Unterschied darin besteht, dass in der einen Variante ein Rückruf von der Antwortstation AS (Fig. 1) automatisch und in der anderen Variante kein Rückruf erfolgt. Wird ein Rückruf verlangt, so wird die Verbindung zwischen Endgerät und Antwortstation AS (Fig. 1a) in einem Zustand Verbindungsabbruch VB ausgelöst und nach einer in einem Zustand Verzögerung VZ abgelaufenen einstellbaren Dauer in einem Zustand Verbindungsaufbau VA von der Antwortstation AS (Fig. 1) wieder aufgebaut. Somit können auch die mit einem Rückruf verbundenen Meldungen und Funktionen eines Endgerätes geprüft werden.

Die drei Zustände Verbindungsabbruch VB, Verzögerung VZ und Verbindungsaufbau VA können aber auch überbrückt werden, wenn dies der Antwortstation AS entsprechend angezeigt wird. In diesem Falle geht die Antwortstation AS vom Zustand Mitteilung M1 direkt in den Zustand Mitteilung M2 über, in dem eine in einem folgenden Zustand Spiegelung SP vorgenommene Sprachspiegelung angezeigt wird. Die Sprachspiegelung ist eine wesentliche weitere Verwendungsform der Antwortstation AS und ermöglicht die Simulation von der durch die Verbindung von zwei Telephonapparaten vorkommenden Situation, dass zwischen diesen Geräten gleichzeitig in beide Richtungen Informationen ausgetauscht werden. Dies wird dadurch erreicht, dass die vom Endgerät abgegebenen Informationen in der Antwortstation AS während einem vorgegebenen aber einstellbaren Intervall gespeichert und verzögert wieder an das Endgerät zurückgesandt werden. Dem Bediener des Endgerätes wird somit ermöglicht, neben dem Überprüfen der in beide Richtungen benötigten Übertragungsfunktionen, ebenfalls die Übertragungsqualität der Leitung - wenn auch nur mit einem subjektiven Massstab - zu beurteilen.

Die Antwortstation AS (Fig. 1) bleibt so lange im Zustand Spiegelung SP bis die Verbindung zum Endgerät ausgelöst wird. Anschliessend geht die Antwortstation AS wiederum in den Wartezustand WS über.

Für die Überprüfung von weiteren zur Übertragung von Bildinformationen mittels Faksimile oder von Daten mittels Computern verwendeten Endgerätetypen sind andere in Fig. 2 nicht dargestellten aber angedeutete Testsequenzen vorgesehen, die sich von der für die Prüfung von Telephonapparaten nur durch die spezielle Verwendung des Endgerätetyps unterscheiden. Insbesondere ist auch die Spiegelung der von einem Faksimile-Endgerät übertragenen Bildinformationen und der von einem Computer über einen Computeranschluss übertragenen Daten von besonderer Bedeutung.

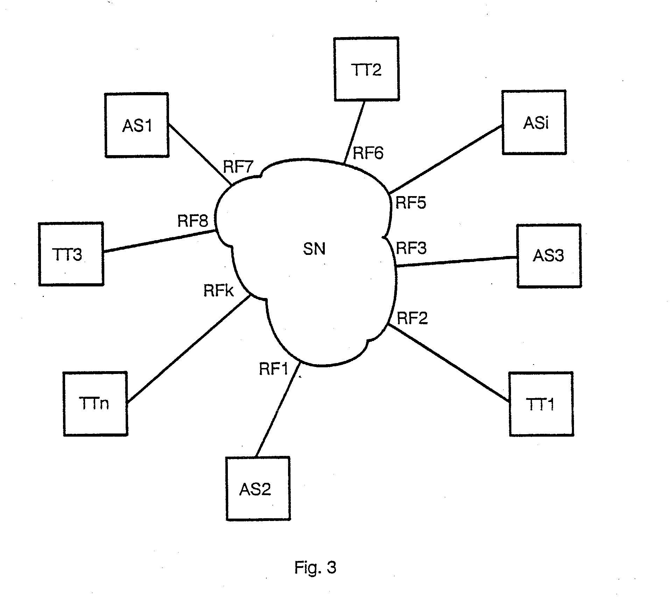

Fig. 3 zeigt ein Femmeldenetz bestehend aus einem Netz SN und verschiedene über Referenzpunkte RF1 bis RFk an das Netz SN angeschlossene Endgeräte TT1 bis TTn und Antwortstationen AS1 bis ASi. Beim Netz SN handelt es sich beispielsweise um ein nach ISDN-Normen aufgebautes Fernmeldenetz, an das an den Referenzpunkten RF1 bis RFk vorgesehenen Basisanschlüssen Endgeräte angeschlossen werden können, wie beispielsweise Telephonapparate, Terminaladapter, Faksimilegeräte der Gruppe 3 oder 4, usw.

Die vorzugsweise ebenfalls über Basisanschlüsse an das Netz SN angeschlossenen Antwortstationen AS1 bis ASi können wie bereits angedeutet unterschiedlich ausgestattet sein. So ist denkbar, dass die Antwortstationen AS2 bis ASi nur mit den minimal erforderlichen Hardware-Komponenten Rechner R und Schnittstellenbaugruppe BG (Fig. 1a) sowie mit den notwendigen Applikationsprogrammen AP1 bis APe (Fig. 1b) ausgerüstet sind und dass nur die Antwortstation AS1 mit Eingabe- und Ausgabeeinheiten KB und BS (Fig. 1a) und zusätzlichen Applikationsprogrammen APe+1 bis APn versehen sind. Die Konfiguration und Steuerung der Antwortstationen AS2 bis ASi wird in diesem Falle von der zentralen Antwortstation AS1 vorgenommen, die mit Hilfe einer Fernsteuerung die Antwortstationen AS2 bis ASi zu steuern und kontrollieren vermag.

Anstelle der zur Verbindung von Antwortstationen AS1 bis ASi mit dem Netz SN vorgeschlagenen Basisanschlüsse können auch Primärratenanschlüsse (CCITT-Empfehlung I-431, Blue Book, Vol. III.8, Genf: ITU 1988) oder ähnliche in anderen Kommunikationsnetzen üblicherweise eingesetzte, normierte Schnittstellen verwendet werden.

Die Antwortstationen AS2 bis ASi können dabei an beliebigen Orten installiert werden, da sie über das Netz SN selbst gesteuert werden können. Damit ergibt sich einen weiteren, bereits angedeuteten Vorteil der modularen Aufbauweise der Antwortstationen AS1 bis ASi, denn Kosten und Wartungsaufwand können durch die je nach Anforderung benötigten Hardware-Komponenten (Fig. 1a) und Applikationsprogrammen AP1 bis APn (Fig. 1b) gezielt minimiert werden.

Die Verwendung von mehreren an das gleiche Netz SN angeschlossenen Antwortstationen AS1 bis ASi hat neben der grösseren Kapazität zur Bedienung von gleichzeitigen Anrufen auch den Vorteil, dass die Wahrscheinlichkeit auf eine besetzte Antwortstation AS1 bis ASi zu treffen mit steigender Zahl i wesentlich sinkt. Insbesondere steigt auch die Zuverlässigkeit des Systems, da ein Systemausfall umso unwahrscheinlicher wird, je mehr Antwortstationen AS1 bis ASi in einem Netz SN vorhanden sind.

Verschiedene Antwortstationen AS1 bis ASi können auch zu sogenannten Mehrfachanschlüssen zusammengefasst werden. Dabei werden die Rufnummern der zum gleichen Mehrfachanschluss zusammengefassten Antwortstationen AS1 bis ASi nicht fix einer dieser Antwortstationen AS1 bis ASi zugewiesen. Vielmehr wird ein ankommender Anruf entsprechend der Verfügbarkeit einer der im jeweiligen Zeitpunkt freien Antwortstationen AS1 bis ASi zugewiesen. Daraus ergibt sich eine grössere Verfügbarkeit und somit eine erhöhte Systemsicherheit des gesamten Prüfsystems.

## Patentansprüche

1. Verfahren zum Prüfen von Vermittlungs- und Übertragungsvorgängen in einem Fernmeldenetz (SN) und von an das Fernmeldenetz (SN) über Referenzpunkte (RF1, ..., RFk) angeschlossenen Endgeräten (TT1, ..., TTn), wovon mindestens eines der Endgeräte (TT1, ..., TTn) eine automatische Antwortstation (AS1, ..., ASi) ist, wobei in einem ersten Schritt eine Verbindung zwischen einem Endgerät (TT1, ..., TTn) und der Antwortstation (AS1, ..., ASi) aufgebaut wird, in einem zweiten Schritt Meldungen und/oder Befehle zwischen dem Endgerät (TT1, ..., TTn) und der Antwortstation (AS1, ..., ASi) ausgetauscht werden und in einem dritten Schritt die Verbindung abgebaut wird, **dadurch gekennzeichnet**, dass im zweiten Schritt eine Identifizierung des Endgerätes (TT1, ..., TTn) vorgenommen wird, dass nach dem Abbau der Verbindung im dritten Schritt eine neue Verbindung von der Antwortstation (AS1, ..., ASi) zum Endgerät (TT1, .., TTn) unter Verwendung der in der Rufidentifikation ermittelten Endgerätenummer aufgebaut wird und dass nach dem Übertragen weiterer Meldungen und/oder Befehle die Verbindung wiederum abgebaut wird.

2. Verfahren nach Anspruch 1, **dadurch gekennzeichnet**, dass bei aufgebauter Verbindung zwischen Antwortstation (AS1, ..., ASi) und Endgerät (TT1, ..., TTn) die von diesem abgegebenen Signale und/oder Daten mit einer in der Antwortstation (AS1, ..., ASi) einstellbaren Verzögerung gespiegelt werden, indem die Signale und/oder Daten an das sendende Endgerät (TT1, ..., TTn) oder an ein anderes Endgerät (TT1, ..., TTn) übertragen werden.

3. Verfahren nach Anspruch 1 oder 2, **dadurch gekennzeichnet**, dass mehrere Antwortstationen (AS1, ..., ASi) an das Femmeldenetz (SN) angeschlossen sind und dass mindestens eine dieser Antwortstationen (AS1, ..., ASi) zur Konfiguration und/oder Steuerung der andern verwendet wird.

4. Verfahren nach Anspruch 3, **dadurch gekennzeichnet**, dass vor der Konfiguration einer in einem Fernmeldenetz (SN) vorhandenen Antwortstation (AS1, ..., ASi) ein Passwort eingegeben werden muss und/oder eine Ruferidentifikation vorgenommen wird.

5. Verfahren nach Anspruch 3 oder 4, **dadurch gekennzeichnet**, dass mindestens zwei Antwortstationen (AS1, ..., ASi) über die gleiche Rufnummer erreichbar sind.

6. Verfahren nach einem der vorangehenden Ansprüche, **dadurch gekennzeichnet**, dass die zwischen Endgeräten (TT1, ..., TTn) und Antwortstationen (AS1, ..., ASi) ausgetauschten Meldungen in der betreffenden Antwortstation (AS1, ..., ASi) aufgezeichnet werden.

7. Antwortstation (AS1, ..., ASi) zur Durchführung des Verfahrens nach Anspruch 1, wobei die Antwortstation (AS1, ..., ASi) mindestens aus einer Schnittstellenbaugruppe (BG) und mindestens aus einem Rechner (R) besteht und die Schnittstellenbaugruppe (BG) einerseits über eine Schnittstelle (S) bzw. über Referenzpunkte (RF1, ..., RFk) mit einem Fernmeldenetz (SN) und anderseits über eine interne Schnittstelle (SR) mit dem Rechner (R) verbunden ist, **dadurch gekennzeichnet**, dass ein Hilfsprogramm (HP) geeignet ist, die Schnittstellenbaugruppe (BG) und ein Systemprogramm (OS), ein Treiberprogramm (TP) und Applikationsprogramme (AP1, ..., APn) geeignet sind, den Rechner (R) zu steuern, dass eine Schnittstelle (SSR) das Hilfsprogramm (HP) mit dem Systemprogramm (OS), eine Schnittstelle (SOT) das Systemprogramm (OS) mit dem Treiberprogramm (TP) und Schnittstellen (SA1, ..., San) das Systemprogramm (OS) mit den Applikationsprogrammen (AP1, ..., APn) verbinden, dass der Rechner (R) geeignet ist, die verschiedenen im Fernmeldenetz (SN) zugelassenen Typen von Endgeräten (TT1, ..., TTn) selbständig zu erkennen und dass die Applikationsprogramme (AP1, ..., APn) mindestens die den erkannten Typen von Endgeräten (TT1, ..., TTn) entsprechenden Prüfungssequenzen enthalten.

## Claims

1. Method for testing switching processes and transfer processes in a telecommunications network (SN) and terminals (TT1, ..., TTn) connected to the telecommunications network (SN) by way of reference points (RF1, ..., RFk), at least one of which terminals (TT1, ..., TTn) is an automatic response station (AS1, ..., ASi), wherein in a first step a connection is set up between a terminal (TT1, ..., TTn) and the response station (AS1, ..., ASi), in a second step messages and/or commands are exchanged between the terminal (TT1, ..., TTn) and the response station (AS1, ..., ASi), and in a third step the connection is cleared, characterised in that in the second step an identification of the terminal (TT1, ..., TTn) is carried out, in that after the connection has been cleared in the third step, a new connection of the response station (AS1 ..., AS) to the terminal (TT1, ..., TTn) is set up using the terminal number established in the call identification, and in that after the transfer of further messages and/or commands, the connection is cleared again.

2. Method according to claim 1, characterised in that with a connection set up between response station (AS1, ..., ASi) and terminal (TT1, ..., TTn), the signals and/or data output by the latter are mirrored with a delay that can be adjusted in the response station (AS1, ..., ASi), by transferring the signals and/or data to the transmitting terminal (TT1, ..., TTn) or to another terminal (TT1, ..., TTn).

3. Method according to claim 1 or 2, characterised in that a plurality of response stations (AS1, ... ASi) are connected to the telecommunications network (SN), and in that at least one of these response stations (AS1, ... ASi) is used to configure and/or control the others.

4. Method according to claim 3, characterised in that before the configuration of a response station (AS1, ..., ASi) present in a telecommunications network (SN), a password has to be input and/or a call identification is carried out.

5. Method according to claim 3 or 4, characterised in that at least two response stations (AS1, ..., ASi) can be reached via the same call number.

6. Method according to one of the preceding claims, characterised in that the messages exchanged between terminals (TT1, ..., TTn) and response stations (AS1, ..., ASi) are recorded in the relevant response station (AS1, ..., ASi).

7. Response station (AS1, ..., AS) for carrying out the method according to claim 1, with the response station (AS1, ..., ASi) consisting of at least one interface module (BG) and at least one computer (R) and the interface module (BG) being connected on the one hand by way of an interface (S) or by way of reference points (RF1, ..., RFk) to a telecommunications network (SN) and on the other hand by way of an internal interface (SR) to the computer (R), characterised in that an auxiliary program (HP) is suitable for controlling the interface module (BG), and a system program (OS), a driver program (TP) and application programs (AP1, ..., APn) are suitable for controlling the computer (R), in that an interface (SSR) connects the auxiliary program (HP) to the system program (OS), an interface (SOT) connects the system program (OS) to the driver program (TP), and interfaces (SA1, ..., San) connect the system program (OS) to the application programs (AP1, ..., APn), in that the computer (R) is suitable for independently recognising the various types of terminals (TT1, ..., TTn) that are permitted in the telecommunications network (SN), and in that the application programs (AP1, ..., APn) contain at least the test sequences which correspond to the types of terminals (TT1, ..., TTn) that are recognised.

## Revendications

1. Procédé de test d'opérations de commutation et de transmission dans un réseau (SN) de télécommunication et de terminaux (TT1 à TTn) qui sont connectés au réseau (SN) de télécommunication par l'intermédiaire de points (RF1 à RFk) de référence, parmi lesquels au moins l'un des terminaux (TT1 à TTn) est une station (AS1 à ASi) de réponse automatique, dans lequel on établit dans une première étape une communication entre un terminal (TT1 à TTn) et la station de réponse (AS1 à ASi), on échange dans une deuxième étape des messages et/ou des instructions entre le terminal (TT1 à TTn) et la station (AS1 à ASi) de réponse et on supprime dans une troisième étape la communication, **caractérisé en ce que** l'on procède dans la deuxième étape à une identification du terminal (TT1 à TTn), on établit après la suppression de la communication dans la troisième étape une nouvelle communication de la station (AS1 à ASi) de réponse au terminal (TT1 à TTn) en utilisant le numéro de terminal déterminé dans l'identification d'appel et on supprime de nouveau la communication après la transmission d'autres messages et/ou instructions.

2. Procédé suivant la revendication 1, **caractérisé en ce que** l'on renvoie, lorsque la communication entre la station (AS1 à ASi) de réponse et le terminal (TT1 à TTn) est établie, les signaux et/ou données fournies par ce terminal avec un retard pouvant être réglé dans la station de réponse (AS1 à ASi), en transmettant les signaux et/ou données au terminal émetteur (TT1 à TTn) ou à un autre terminal (TT1 à TTn).

3. Procédé suivant la revendication 1 ou 2, **caractérisé en ce que** plusieurs stations de réponse (AS1 à ASi) sont connectées au réseau (SN) de télécommunication et en ce que l'on utilise au moins l'une de ces stations (AS1 à ASi) de réponse pour la configuration et/ou la commande des autres stations.

4. Procédé suivant la revendication 3, **caractérisé en ce qu**'il faut introduire un mot de passe avant la configuration d'une station (AS1 à ASi) de réponse présente dans un réseau (SN) de télécommunication et/ou procéder à une identification d'appel.

5. Procédé suivant la revendication 3 ou 4, **caractérisé en ce que** l'on peut atteindre au moins deux stations (AS1 à ASi) de réponse par le même numéro d'appel.

6. Procédé suivant l'une des revendications précédentes, **caractérisé en ce que** l'on enregistre dans la station (AS1 à ASi) de réponse concernée les messages échangés entre des terminaux (TT1 à TTn) et des stations (AS1 à ASi) de réponse.

7. Station (AS1 à ASi) de réponse pour la mise en oeuvre du procédé suivant la revendication 1, la station (AS1 à ASi) de réponse étant constituée au moins d'un module (BG) d'interface et d'au moins un calculateur (R) et le module (BG) d'interface étant relié d'une part par l'intermédiaire d'une interface (S) ou par l'intermédiaire de points (RF1 à RFk) de référence à un réseau (SN) de télécommunication et d'autre part par l'intermédiaire d'une interface interne (SR) au calculateur (R), caractérisé en ce qu'un programme auxiliaire (HP) est approprié, le module (BG) d'interface et un programme (OS) de système, un programme pilote (TP) et des programmes d'applications (AP1 à APn) sont appropriés pour commander le calculateur (R), une interface (SSR) relie le programme auxiliaire (HP) au programme (OS) de système, une interface (SOT) relie le programme (OS) de système au programme pilote (TP) et des interfaces (SA1 à SAn) relient le programme (OS) de système aux programmes (AP1 à APn) d'application, le calculateur (R) est approprié pour reconnaître automatiquement les différents types de teminaux (TT1 à TTn) admissibles dans le réseau (SN) de télécommunication et les programmes (AP1 à APn) d'application comprennent au moins les séquences de test correspondant aux types reconnus de terminaux (TT1 à TTn).
